# EUROPÄISCHE PATENTSCHRIFT

(11) **EP 1 646 540 B1**
(45) Veröffentlichungstag und Bekanntmachung des Hinweises auf die Patenterteilung: **14.10.2009**
(21) Anmeldenummer: 04738486.2
(22) Anmeldetag: 07.05.2004
(51) Int. Cl.: B60S 1/58, B60S 1/34

(54) **SCHEIBENWISCHVORRICHTUNG, INSBESONDERE FÜR EIN KRAFTFAHRZEUG**
WINDSCREEN WIPER SYSTEM IN PARTICULAR FOR A MOTOR VEHICLE
SYSTEME D'ESSUIE-GLACE, NOTAMMENT POUR UN VEHICULE AUTOMOBILE

(30) Priorität: 11.07.2003 DE 10331568
(43) Veröffentlichungstag der Anmeldung: 19.04.2006
(73) Patentinhaber: ROBERT BOSCH GMBH, 70442 Stuttgart (DE)
(72) Erfinder: KRAUS, Achim, 77815 Buehl (DE); ZIMMER, Joachim, 77880 Sasbach (DE); DIETRICH, Jan, 77815 Buehl (DE); FLEISCHER, Claus, 77815 Buehl (DE); METZ, Ulrich, 77855 Achern (DE)
(86) Internationale Anmeldenummer: PCT/DE2004/000958
(87) Internationale Veröffentlichungsnummer: WO 2005/009812

(56) Entgegenhaltungen:
- WO-A-02/06098
- GB-A- 355 521

## Beschreibung

### Stand der Technik

Die Erfindung betrifft eine Scheibenwischvorrichtung, insbesondere für ein Kraftfahrzeug, nach dem Oberbegriff des unabhängigen Anspruchs.

Es sind schon zahlreiche Scheibenwischvorrichtungen für Kraftfahrzeuge bekannt, die zum Wischen einer bewegbaren Scheibe, beispielsweise einer Heckscheibe eines Mini-Vans, geeignet sind. Diese umfassen im wesentlichen ein erstes Kupplungsteil, das durch ein Antriebsteil drehantreibbar ist, ein zweites Kupplungsteil, das drehfest mit einer Wischerwelle verbunden ist, an der ein Wischhebel mit einem Wischblatt befestigt ist. Am ersten oder zweiten Kupplungsteil ist ein federndes Element zur Drehmomentenübertragung vorgesehen.

Eine derartige Scheibenwischvorrichtung ist aus der DE-A-100 34 042 bekannt. Das federnde Element ist hierbei als Schraubenfeder ausgebildet, die mit einem Bolzen wirkverbunden ist. Schraubenfeder und Bolzen sind hierbei in einer Hülse gelagert, was relativ viel Bauraum benötigt. Darüber hinaus ist dies aufwändig und kostenintensiv, was sich besonders in der Serienfertigung negativ bemerkbar macht.

Aus der GB-A-3 555 21 ist eine Scheibenwischvorrichtung mit dem Merkmal des Oberbegriffs des Anspruchs 1 bekannt.

### Vorteile der Erfindung

Die erfindungsgemäße Scheibenwischvorrichtung mit den Merkmalen des Hauptanspruches hat den Vorteil, das durch ein im wesentlichen ebenes Federelement Bauraum eingespart wird und eine einfache und kostengünstige Lösung zur Verfügung steht.

Durch die in den Unteransprüchen aufgeführten Maßnahmen ergeben sich vorteilhafte Weiterbildungen und Verbesserungen der im Hauptanspruch angegebenen Merkmale.

Vorteilhafter Weise weist des Mittel ein Koppelelement auf, sodass eine sichere Drehmomentenübertragung gewährleistet ist.

In einer vorteilhafter Weise kostengünstigen und einfachen Ausbildung ist das Federelement als Blatt- oder Spiralefeder ausgebildet.

Weiterhin ist es als vorteilhaft anzusehen, wenn des erste Kupplungs-Teil eine Platte mit mindestens einer Öffnung umfasst, die mit dem Koppelelement zusammenzuwirken vermag. Auf diese Weise wird eine gute und sichere Drehmomentenübertragung gewährleistet, ohne dass zusätzliche Bauelemente benötigt werden.

Hierbei ist vorteilhaft, wenn die Platte im Bereich zu Öffnung eine Führung aufweist, die insbesondere den Bolzen in die Öffnung lenkt.

In einer einfachen, vorteilhaften und kostengünstigen Ausführung ist die Platte aus Kunststoff, insbesondere in einem Spritzguss-Verfahren hergestellt.

Hierbei greift vorteilhafter Weise der Bolzen in einen gekoppelten Zustand in die Öffnung ein.

Vorteilhafter Weise ist der Bolzen in ausgekuppelten Zustand durch das gespannte Federelement auf die Platte gedrückt, sodass ein zuverlässiges einkuppeln gewährleistet ist.

Weiterhin ist es als vorteilhaft anzusehen, wenn das zweite Kupplungs Teil eine Kurbel und ein Lagergehäuse umfasst, und das Federelement zwischen Lagergehäuse und Kurbel gehalten ist. Insbesondere kann so auf zusätzliche Befestigungselemente für das Federelement verzichtet werden.

### Zeichnungen

Ein Ausführungsbeispiel der Erfindung ist in den Zeichnungen dargestellt und in der nachfolgenden Beschreibung näher erläutert. Es zeigen:
Figur 1, eine erfindungsgemäße Scheibenwischvorrichtung in einer Querschnittsdarstellung,
Figur 2,das zweite Kupplungs-Teil mit dem das Federelement umfassenden Mittel und
Figur 3, eine Blattfeder einer erfindungsgemäßen Scheibenwischvorrichtung im Detail.

### Beschreibung des Ausführungsbeispiels

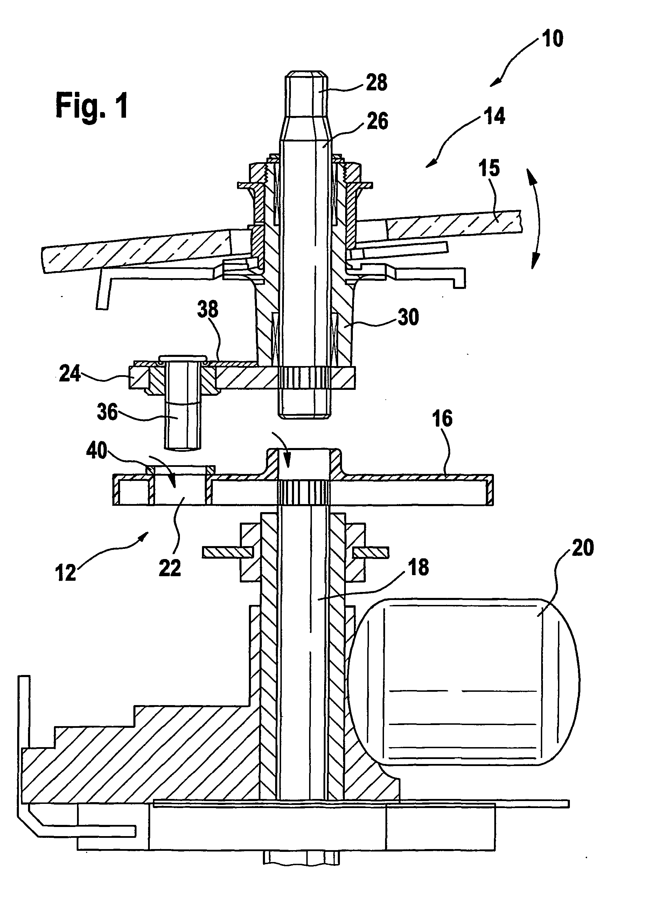

In Figur 1 ist eine erfindungsgemäße Scheibenwischvorrichtung 10 in einer Querschnitts Darstellung gezeigt. Diese umfasst im wesentlichen ein erstes Kupplungs Teil 12, sowie ein zweites Kupplungs Teil 14. Das erste Kupplungs Teil 12 besteht im wesentlichen aus einer Platte 16, die aus Kunststoff in einem Spritzguss Verfahren hergestellt ist. In einer alternativen Ausführungsform kann diese auch aus Metall bestehen. Die Platte 16 ist drehfest mit einer Abtriebswelle 18 verbunden, die von einer Antriebseinrichtung 20 angetrieben ist. Die Platte 16 weist darüber hinaus einer Öffnung 22 auf, die im radial äußeren Bereich angeordnet ist. Im Kraftfahrzeuge ist das erste Kupplungs Teil 12 und die Antriebseinrichtung 20 an der Heckklappe befestigt.

Das zweite Kupplungs Teil 14, ist am Kraftfahrzeuge an einer Heckscheibe 15 befestigt und umfasst im wesentlichen eine Kurbel 24, die drehfest mit einer Wischerwelle 26 verbunden ist. An dem der Kurbel 24 abgewandten Ende der Wischerwelle 26 weist diese einen Konus 28 auf, der zur Befestigung eines Wischhebels dient, der hier der Übersicht halber nicht gezeichnet ist. Die Wischerwelle 26 ist in Lagern 32 in einem Lagergehäuse 30 gelagert.

Die Wischerwelle 26 ist auf der selben Achse angeordnet wie die Abtriebswelle 18. Im radial äußeren Bereich der Kurbel 24 ist ein Mittel 34 zur Drehmomentenübertragung angeordnet. Dies umfasst im wesentlichen einen zylindrischen Bolzen als Koppelelement 36, der durch ein Federelement 38 federnd beweglich mit der Kurbel 24 verbunden ist. Das Federelement 38 ist auf der der Platte 16 abgewandten Seite der Kurbel 24, zwischen Lagergehäuse 30 und Kurbel 24 angeordnet. Es ist als Blattfeder ausgebildet, jedoch ist alternativ auch die Ausbildung als Spiralfeder möglich. Der Bolzen 36 durchgreift die Kurbel 24 und wird durch diese gelagert. Alternativ kann natürlich auch eine weitere Lagerung vorgesehen sein. An seinem der Platte 16 abgewandten Ende ist der Bolzen mit der Blattfeder 38 wirkverbunden. Er ist hierbei der Art angeordnet, dass er in eingekuppelten Zustand in die Öffnung 22 des ersten Kupplungs Teils 12 eingreift, sodass ein Drehmoment vom ersten Kupplungs Teil 12 in das zweite Kupplungs Teil 14 übertragen werden kann.

Im folgenden wird die Funktion der beiden Kupplungs Teile 12, 14 kurz erläutert. Wird die Heckscheibe 15 des Kraftfahrzeugs geschlossen, so ist die Öffnung 22 nicht zwangsweise in der Flucht des Bolzen 36. Der Bolzen 36 setzt damit auf der Platte 16 auf, wobei er unter Spannung des Federelementes 38 zurückweicht. Versetzt die Antriebseinrichtung 20 die Platte 16 in eine Drehbewegung, wird also die Scheibenwischvorrichtung 10 in Betrieb gesetzt, so gleitet der Bolzen 36 auf der Platte 16 und wird durch das Federelement 38 auf diese gedrückt. Befindet sich nun die Öffnung 22 in der Flucht mit dem Bolzen 36, so gleitet der Bolzen 36 in die Öffnung 22 ein, wobei das Federelement 38 entspannt wird. Zur Verbesserung der Führung des Bolzens 36 auf der Platte 16 sind Führungen 40 im Bereich der Öffnung 22 vorgesehen, die im wesentlichen aus im Querschnitt rechteckigen Wänden bestehen. Das erste und zweite Kupplungs Teil 12, 14 sind damit eingekuppelt, wodurch die Wischerwelle 26 angetrieben und damit in Bewegung versetzt wird.

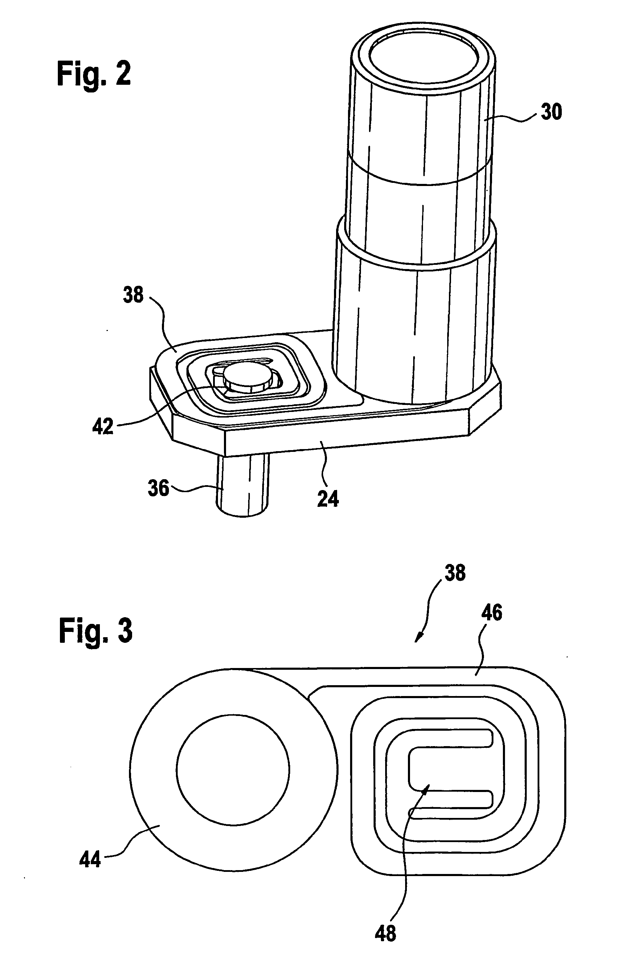

In Figur 2 ist das Lagergehäuse 30 mit der Kurbel 24, dem Bolzen 36 und dem Federelement 38 in einer perspektivischen Darstellung gezeigt. Das Federelement 38 ist als Blattfeder ausgebildet, die von im wesentlichen ebener Gestalt ist und sich schneckenartig um den Bolzen 36 windet. Im Zentrum des schneckenartigen Federelementes 38 ist das Federelement 38 gabelartig geformt und greift in eine Nute 42 des Bolzens 36 ein, sodass der Bolzen 36 mit dem Federelement 38 wirkverbunden ist. Die Breite der Nute 42 ist zweckmäßigerweise etwas größer als die Dicke der Blatt- oder Spiralfeder, damit ein Winkelversatz beim Einfedern ausgeglichen wird. Das andere Ende des Federelementes 38 ist zwischen Kurbel 24 und Lagergehäuse 30 eingeklemmt.

In Figur 3 ist das Federelement 38 in einer Draufsicht gezeigt. Es umfasst im wesentlichen ein Auge 44, welches zur Befestigung zwischen der Kurbel 24 und dem Lagergehäuse 30 dient. Alternativ kann die Blattfeder 38 anstatt durch ein Auge 44 auch nur auf einer Seite des Lagergehäuses 30 befestigt sein. Gleichzeitig dient das Federelement 38 mit dem auge 44 als Anlauf- und/oder Federscheibe des Lagers 32. Daran schließt sich ein schneckenartiger Abschnitt 46 an, der an seinem inneren Ende 48 gabelartig geformt ist.

Alternativ kann statt dem Auge 44 natürlich ebenso ein gabelartiger Abschnitt vorgesehen sein oder das Federelement 38 auf andere Weise auf der Kurbel 24 befestigt sein. Beispielsweise kann ein separates Befestigungsmittel, wie ein Niet oder eine Schraube vorgesehen sein.

Als weitere Alternative kann das Federelementes 38 mit dem Bolzen 36, also das Mittel 34, auch am ersten Kupplungs Teil 12 und die Öffnung 22 am zweiten Kupplungs Teil 14 vorgesehen sein.

## Patentansprüche

1. Scheibenwischvorrichtung (10), insbesondere für ein Kraftfahrzeug, zum Wischen einer bewegbaren Scheibe (15), mit einem ersten Kupplungs-Teil (12), das durch eine Antriebseinrichtung (20) drehantreibbar ist und einem zweiten Kupplungs-Teil (14), das drehfest mit einer Wischerwelle (26) verbunden ist, an der ein Wischhebel befestigbar ist, wobei am ersten oder zweiten Kupplungs-Teil (12, 14) ein Mittel (34) zur Drehmomentenübertragung vorgesehen ist, wobei das Mittel (34) ein im wesentlichen ebenes Federelement (38) und einen Bolzen (36) umfasst, **dadurch gekennzeichnet, dass** das Federelement (38) sich schneckenartig um den Bolzen (36) windet.

2. Scheibenwischvorrichtung (10) nach einem der vorhergehenden Ansprüche, **dadurch gekennzeichnet, dass** das Federelement (38) als Blatt- oder Spiralfeder ausgebildet ist.

3. Scheibenwischvorrichtung (10) nach einem der vorhergehenden Ansprüche, **dadurch gekennzeichnet, dass** das erste Kupplungs-Teil (12) eine Platte (16) mit mindestens einer Öffnung (22) umfasst.

4. Scheibenwischvorrichtung (10) nach Anspruch 3, **dadurch gekennzeichnet, dass** die Platte im Bereich der Öffnung (22) eine Führung (40) aufweist.

5. Scheibenwischvorrichtung (10) nach einem der Ansprüche 3 und/oder 4, **dadurch gekennzeichnet, dass** die Platte (16) aus Kunststoff, insbesondere in einen Spritzgußverfahren hergestellt ist.

6. Scheibenwischvorrichtung (10) nach einem der Ansprüche 3 bis 5, **dadurch gekennzeichnet, dass** der Bolzen (36) in eingekuppelten Zustand in die Öffnung (22) eingreift.

7. Scheibenwischvorrichtung (10) nach einem der Ansprüche 3 bis 6, **dadurch gekennzeichnet, dass** der Bolzen (36) in ausgekuppelten Zustand durch das gespannte Federelement (38) auf die Platte (16) gedrückt ist.

8. Scheibenwischvorrichtung (10) nach einem der Ansprüche 3 bis 7, **dadurch gekennzeichnet, dass** das zweite Kupplungs-Teil (14) eine das Mittel (34) tragende Kurbel (24) und ein Lagergehäuse (30) umfasst und das Federelement (38) zwischen Kurbel (24) und Lagergehäuse (30) gehalten ist.

## Claims

1. Window wiper device (10), in particular for a motor vehicle, for wiping a movable window (15), with a first coupling part (12) which can be driven in a rotational manner by a driving mechanism (20), and with a second coupling part (14) which is connected in a rotationally fixed manner to a wiper shaft (26) to which a wiper lever can be fastened, wherein a means (34) for transmitting torque is provided on the first or second coupling part (12, 14), and wherein the means (34) comprises a substantially planar spring element (38) and a bolt (36), **characterized in that** the spring element (38) winds around the bolt (36) in the manner of an endless screw.

2. Window wiper device (10) according to Claim 1, **characterized in that** the spring element (38) is designed as a leaf spring or spiral spring.

3. Window wiper device (10) according to one of the preceding claims, **characterized in that** the first coupling part (12) comprises a plate (16) having at least one opening (22).

4. Window wiper device (10) according to Claim 3, **characterized in that** the plate has a guide (40) in the region of the opening (22).

5. Window wiper device (10) according to Claim(s) 3 and/or 4, **characterized in that** the plate (16) is produced from plastic, in particular by injection moulding.

6. Window wiper device (10) according to one of Claims 3 to 5, **characterized in that,** in the coupled-in state, the bolt (36) engages in the opening (22).

7. Window wiper device (10) according to one of Claims 3 to 6, **characterized in that**, in the decoupled state, the bolt (36) is pressed onto the plate (16) by the tensioned spring element (38).

8. Window wiper device (10) according to one of Claims 3 to 7, **characterized in that** the second coupling part (14) comprises a crank (24) supporting the means (34), and a bearing housing (30), and the spring element (38) is held between the crank (24) and the bearing housing (30).

## Revendications

1. Système d'essuie-glace (10), en particulier pour véhicule automobile, pour essuyer une vitre mobile (15), avec une première pièce de couplage (12), qui peut être entraînée en rotation au moyen d'un dispositif d'entraînement (20), et une deuxième pièce de couplage (14), qui est solidaire en rotation d'un arbre d'essuie-glace (26) sur lequel un levier de balai peut être fixé, dans lequel il est prévu sur la première ou la deuxième pièce de couplage (12, 14) un moyen (34) pour la transmission du couple de rotation, dans lequel le moyen (34) comprend un élément de ressort essentiellement plan (38) et un boulon (36), **caractérisé en ce que** l'élément de ressort (38) s'enroule en hélice autour du boulon (36).

2. Système d'essuie-glace (10) selon la revendication 1, **caractérisé en ce que** l'élément de ressort (38) se présente sous la forme d'un ressort à lame ou d'un ressort spiral.

3. Système d'essuie-glace (10) selon l'une quelconque des revendications précédentes, **caractérisé en ce que** la première pièce de couplage (12) comprend une plaque (16) avec au moins une ouverture (22).

4. Système d'essuie-glace (10) selon la revendication 3, **caractérisé en ce que** la plaque présente un guidage (40) dans la région de l'ouverture (22).

5. Système d'essuie-glace (10) selon la revendication 3 et/ou la revendication 4, **caractérisé en ce que** la plaque (16) est fabriquée en matière plastique, en particulier par un procédé de coulée par injection.

6. Système d'essuie-glace (10) selon l'une quelconque des revendications 3 à 5, **caractérisé en ce que** le boulon (36) s'engage dans l'ouverture (22) à l'état couplé.

7. Système d'essuie-glace (10) selon l'une quelconque des revendications 3 à 6, **caractérisé en ce que** le boulon (36) est poussé sur la plaque (16) par l'élément de ressort (38) sous contrainte à l'état découplé.

8. Système d'essuie-glace (10) selon l'une quelconque des revendications 3 à 7, **caractérisé en ce que** la deuxième pièce de couplage (14) comprend une manivelle (24) portant le moyen (34) et un boîtier de palier (30) et l'élément de ressort (38) est tenu entre la manivelle (24) et le boîtier de palier (30).
